# EUROPEAN PATENT APPLICATION

(11) **EP 4 373 108 A1**
(43) Date of publication of application: **22.05.2024**
(21) Application number: 21949710.4
(22) Date of filing: 16.07.2021
(51) Int. Cl.: H04N 21/643

(54) **DATA TRANSMISSION METHOD, DATA TRANSMISSION APPARATUS AND STORAGE MEDIUM**

(71) Applicant: Beijing Xiaomi Mobile Software Co., Ltd., Beijing 100085 (CN)
(72) Inventor: CHEN, Dong, Beijing 100085 (CN)
(74) Representative: dompatent von Kreisler Selting Werner - Partnerschaft von Patent- und Rechtsanwälten mbB
(86) International application number: PCT/CN2021/106727
(87) International publication number: WO 2023/283926

(57) **Abstract**

The present disclosure relates to a data transmission method, a data transmission apparatus and a storage medium. The data transmission method is applied to a data sending end, and the method comprises: in response to determining that a byte in which a first type of data is located in an Internet protocol (IP) data packet is successfully sent, determining to send a byte in which a second type of data is located, the degree of importance of the first type of data being greater than that of the second type of data. The present disclosure can reduce the waste of transmission resources and can improve the data transmission efficiency.

## Description

### TECHNICAL FIELD

The present disclosure relates to the field of wireless communication technology, in particular to a data transmission method, a data transmission apparatus, and a storage medium.

### BACKGROUND

In a wireless environment, an Internet Protocol (IP) packet may experience a problem of IP packet being discarded during transmission. For example, some IP packets may be lost due to transmission failure, or the IP packets may become invalid due to excessive transmission delay.

In an IP packet, if not all key bytes in the IP packet are successfully sent, the entire IP packet still needs to be discarded, even if other bytes are sent successfully. Therefore, the waste of data transmission resources will be caused.

### SUMMARY

To overcome the problems existing in related art, the present disclosure provides a data transmission method, a data transmission apparatus, and a storage medium.

According to a first aspect of embodiments of the present disclosure, a data transmission method is provided. The data transmission method is applied to a data sender, and includes:
determining, in response to determination that a byte where first type of data is located in an Internet Protocol, IP, packet is successfully sent, a byte where second type of data is located to be sent; wherein importance of the first type of data is greater than importance of the second type of data.

In some embodiments, the determination that the byte where the first type of data is located in the IP packet is successfully sent includes:
determining a first byte configured for transmitting the first type of data, wherein the first byte is the first N bytes in the IP packet, where N is a positive integer; and determining, in response to successfully sending of the first byte, that the first type of data is successfully sent.

In some embodiments, the first byte is determined based on a protocol provision or a rule.

In some embodiments, the byte where the second type of data is located includes a second byte, and the second byte is a byte other than the first byte in the IP packet.

In some embodiments, the method further includes:
stopping, in response to unsuccessfully sending of the byte where the first type of data is located in the IP packet, sending of the byte where the second type of data is located in the IP packet; and sending, based on a next IP packet, a byte where the first type of data is located in the next IP packet.

According to a second aspect of embodiments of the present disclosure, a data transmission apparatus is provided. The data transmission apparatus is applied to a data sender, and the apparatus including:
a sending module configured to determine, in response to determination that a byte where first type of data is located in an IP (Internet Protocol) packet is successfully sent, to send a byte where second type of data is located, the importance of the first type of data being greater than the importance of the second type of data.

In some embodiments, the sending module is configured to:
determine a first byte configured for transmitting the first type of data, with the first byte being the first N bytes in the IP packet, and N being a positive integer; and to determine that the first type of data is successfully sent in response to successfully sending of the first byte.

In some embodiments, the first byte is determined based on a protocol provision or a rule.

In some embodiments, the byte where the second type of data is located includes a second byte, and the second byte is a byte other than the first byte in the IP packet.

In some embodiments, the sending module is further configured to:
stop, in response to unsuccessfully sending of the byte where the first type of data is located in the IP packet, sending of the byte where the second type of data is located in the IP packet; and to send, based on a next IP packet, a byte where the first type of data is located in the next IP packet.

According to a third aspect of embodiments of the present disclosure, a data transmission device is provided, and includes:
a processor; and a memory configured to store instructions executable by the processor; and the processor is configured to implement the data transmission method described in the first aspect or any one of embodiments of the first aspect.

According to a fourth aspect of embodiments of the present disclosure, a non-transitory computer-readable storage medium is provided, that, when instructions in the storage medium are executed by a processor of a mobile terminal, enables the mobile terminal to implement the data transmission method described in the first aspect or any one of embodiments of the first aspect.

Technical solutions of embodiments of the present disclosure can provided following beneficial effects: based on the present disclosure, it is possible to determine to send the second type of data after determining that the first type of data is successful sent, so that the relatively unimportant data can be sent after the relatively important data has been successfully sent. Due to the fact that the byte where the first type of data is located and the byte where the second type of data is located are at different positions in the IP packet, the first type of data can be placed in the first byte in the IP packet, so that subsequent bytes can be sent while ensuring the successfully sending of the first type of data. As a result, during the process of sending IP packets, it is possible to avoid wasting resources due to the sending of invalid bytes, and improve the transmission efficiency of bytes in IP packets, further enhancing the transmission efficiency of IP packets.

It should be understood that the general description above and the detailed description in the following are only illustrative and explanatory, and do not limit the present disclosure.

### BRIEF DESCRIPTION OF THE DRAWINGS

The drawings herein, which are incorporated in and constitute a part of this specification, illustrate embodiments consistent with the present disclosure and serve together with the specification to explain principles of the present disclosure.
FIG. 1 is a schematic diagram of an IP datagram format according to embodiments of the present disclosure.
FIG. 2 is a diagram of an architecture of a communication system between a network device and a terminal according to embodiments of the present disclosure.
FIG. 3 is a flowchart of a data transmission method according to embodiments of the present disclosure.
FIG. 4 is a flowchart of a data transmission method according to embodiments of the present disclosure.
FIG. 5 is a flowchart of a data transmission method according to embodiments of the present disclosure.
FIG. 6 is a block diagram of a data transmission apparatus according to embodiments of the present disclosure.
FIG. 7 is a block diagram of a data transmission device according to embodiments of the present disclosure.
FIG. 8 is a block diagram of another data transmission device according to embodiments of the present disclosure.

### DETAILED DESCRIPTION

A detailed explanation of exemplary embodiments, examples of which are illustrated in the drawings, will be provided herein. When the following description involves drawings, unless otherwise indicated, the same numerals in different drawings represent the same or similar elements. The examples described in the following embodiments do not represent all embodiments consistent with the present disclosure. Instead, they are only examples of apparatuses and methods consistent with some aspects of the present disclosure as detailed in the appended claims.

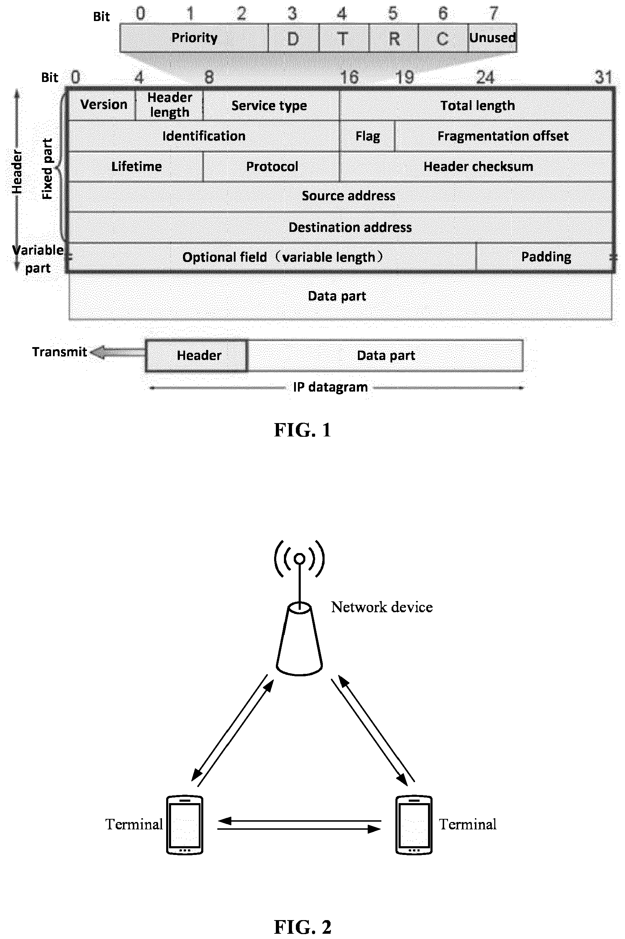

The IP protocol is generally used in various data transmissions in the field of the Internet, and can also be applied in the field of the mobile communication. The protocol unit controlled by the IP protocol for transmission is called an IP datagram (IP package or IP packet). Due to the shielding of the differences between various physical subnets in the lower layer by the IP protocol, an IP datagram of a unified format can be provided to the upper layer. The IP datagram adopts a packet transmission method and provides services in a connectionless manner. The functionality of the IP packet protocol can be determined through the format of the IP datagram. For example, an IPv4 datagram consists of a header and data, where data is the data that needs to be transmitted by the upper layer, and the header is the control information added to correctly transmit the upper layer data. The first part of the header has a fixed length of 20 bytes, which is mandatory for all IP datagrams. After the fixed part in the header is an optional field with variable length. FIG. 1 is a schematic diagram of an IP datagram format according to embodiments of the present disclosure. As shown in FIG. 1, the fixed part includes a version, a header length, differentiated services, a total length, an identification, a flag, a fragmentation offset, a lifetime, a protocol, a header checksum, a source address and a destination address.
(1) The version occupies 4 bits, referring to the IP protocol version. The IP protocol version used by both communication parties must be consistent. The version number of the IP protocol widely used is 4 (i.e. IPv4).
(2) The header length occupies 4 bits, and can represent a maximum decimal value of 15. It should be noted that a unit of the number represented by this field has a word length of 32 bits (word length of 32 bits is 4 bytes). Therefore, when the IP header length is 1111 (i.e. decimal value of 15), the header length will reach 60 bytes. When the header length of an IP packet is not a multiple of 4 bytes, it must be filled with the last padding field. Therefore, the data section always starts at the multiple of 4 bytes, which is more convenient for implementing the IP protocol. The disadvantage of limiting the header length to 60 bytes is that it may not be sufficient at times. Implementing in such a way is to encourage users to minimize the overhead as much as possible. The header length most commonly used is 20 bytes (i.e. the header length is 0101), and no options are used at this time.
(3) The differentiated services occupy 8 bits, to obtain better services. It can also be called as a service type, and this field is used when services are to be distinguished.
(4) The total length refers to the sum of lengths of the header and the data, measured in bytes. The total length field is 16 bits, and thus the maximum length of the datagram is 2 ^ 16-1=65535 bytes.
   Each data link layer below the IP layer has its own frame format, in which the maximum length of the data field in the frame format is included, known as the Maximum Transfer Unit (MTU). When a datagram is encapsulated as a frame in the link layer, the total length of the datagram (i.e. the header plus the data) must not exceed the MTU value of the data link layer below.
(5) The identification occupies 16 bits. The IP software maintains a counter in the memory, which increases by 1 for each datagram generated and assigns this value to the identification field. But this "identification" is not a serial number, because the IP is a connectionless service, and there is no issue with receiving datagrams in order. When a datagram must be fragmented due to its length exceeding the MTU of the network, the value of this identification field is copied to the identification fields of all datagrams. The same values of the identification fields enable each fragmented datagram to be correctly reassembled into the original datagram.
(6) The flag occupies 3 bits, and 2 bits of which are meaningful.
   The lowest bit in the flag field is denoted as MF (More Fragment). MF=1 indicates that there are still fragmented datagrams in the following. MF=0 indicates that this is already the last fragmented datagram among several datagrams. The middle bit of the flag field is marked as DF (Don't Fragment), which means "cannot be fragmented". Fragmentation is only allowed when DF=0.
(7) The fragmentation offset occupies 13 bits. The fragmentation offset refers to a relative position of a fragmentation in the original packet after a long packet is fragmented. Where does the fragmentation start relative to a starting point of the data field. The fragmentation offset is measured in units of 8 bytes. That is, except for the last fragmentation, the length of each fragmentation must be an integer multiple of 8 bytes (64 bits).
(8) The lifetime occupies 8 bits. Time to Live (TTL) is a commonly used English abbreviation for the lifetime field, indicating the lifespan of a datagram in the network. The field is set by a source point that sends the datagram, whose purpose is to prevent undeliverable datagrams from circling around the internet without restrictions, thus wasting network resources. The initial design was to use seconds as the unit of TTL. The amount of time the datagram is consumed by the router is subtracted from the TTL every time one router is passed through. If the time consumed by the datagram at the router is less than 1 second, the TTL value is reduced by 1. When the TTL value is 0, the datagram is discarded. The function of the TTL field was changed later to "hop limit" (but the name remained unchanged). The router reduces the TTL value by 1 before forwarding the datagram. If the TTL value decreases to zero, the datagram is discarded and no longer forwarded. Therefore, the unit of TTL is no longer the second, but the hop. The meaning of TTL is to indicate how many routers a datagram can pass through in a network at most. Obviously, the maximum value by which the datagram passes through the router in the network is 255. If the initial value of TTL is set to 1, it means that the datagram can only be transmitted in the local area network.
(9) The protocol occupies 8 bits, and the protocol field indicates which protocol the data carried by the datagram uses, so that the IP layer of a destination host knows to which processing process should hand over the data section.
(10) The header checksum occupies 16 bits. This field only checks the header of the datagram, but does not include the data section. Due to the fact that every time a datagram passes through a router, the router needs to recalculate the header checksum (including some fields such as the lifetime, the flag, the fragmentation offset, etc., which may change), if the data section is not verified, the calculation workload can be reduced.
(11) The source address occupies 32 bits.
(12) The destination address occupies 32 bits.

### Variable part

The variable part of the IP header is an optional field. The option field is used to support troubleshooting, measurement, and security measures. The length of this field can vary from 1 byte to 40 bytes, depending on the selected item. Some option items only require 1 byte, which includes only an option code of 1 byte. But there are also some options that require multiple bytes, which are concatenated one by one without a delimiter in between. Finally, the fields are filled with all zeros to make them multiples of 4 bytes.

Adding the variable part of the header is to enhance the functionality of the IP datagram, but it also makes the header length of the IP datagram variable, which increases the overhead of processing the datagram by each router. The new IP version IPv6 makes the header length of the IP datagram fixed. These optional options are defined as follows:
(1) Security and handling restrictions (used in the military field).
(2) Recording the path (each router is allowed to record its IP address).
(3) Time Stamp (each router is allowed to record the IP address and local time that the IP datagram passed through each router).
(4) Loose Source Route (a series of IP addresses that the datagram must pass through is specified).
(5) Strict Source Route (similar to the Loose Source Route, but it is required that only these specified addresses and no other addresses can be passed through).

In the wireless environment based on the communication technology, the packet may possible to be lost during the IP packet transmission. For example, during data transmission from the network device to the terminal, not all IP packets can reach the terminal. Some IP packets are lost due to excessive latency or IP packet failure, which prevents them from reaching the terminal.

For real-time video services, after generating data from a frame of image on the screen, multiple IP packets need to be transmitted, and these multiple IP packets need to arrive at a receiving terminal within the time for displaying the image. If the multiple IP packets associated with the frame image do not reach the receiver within the display time, it is determined that the multiple IP packets are invalid due to inability to display. Moreover, the IP packets required for a frame of image include critical IP packets, that is, in order to display the frame of image, the critical IP packets must reach the receiver. If the critical IP packets do not reach the receiver, it is determined that the frame of image cannot be displayed, and other IP packets need to be discarded. Other IP packets can be non-critical IP packets.

In some services, each IP packet contains relatively important data and relatively unimportant data, based on which, the present disclosure proposes a data transmission method. According to the method, the relatively important data in each IP packet is placed in the first few bytes of the IP packet, and the IP packet is continued to be sent after the first few bytes have been successfully sent. Otherwise, the IP packet is discarded. As a result, the efficiency in the data transmission can be improved.

FIG. 2 is a diagram of an architecture of a communication system between a network device and a terminal according to embodiments of the present disclosure. The communication method provided by the present disclosure can be applied to the architecture of the communication system shown in FIG. 2. As shown in FIG. 2, a network side device can send signaling based on the architecture shown in FIG. 2.

It can be understood that the communication system including the network device and the terminal shown in FIG. 2 is only a schematic explanation, and the wireless communication system can also include other network devices, for example, a core network device, a wireless relay device, and a wireless backhaul device, which are not shown in FIG. 2. The number of network devices and terminals included in the wireless communication system is not limited in embodiments of the present disclosure.

It can be further understood that the wireless communication system in embodiments of the present disclosure is a network that provides wireless communication functions. Wireless communication systems can adopt different communication technologies, such as code division multiple access (CDMA), wideband code division multiple access (WCDMA), time division multiple access (TDMA), frequency division multiple access (FDMA), orthogonal frequency division multiple access (OFDMA), single carrier FDMA (SC-FDMA), and carrier sense multiple access with collision avoidance. Networks can be divided according to factors such as different capacities, rates, and latencies, into 2G (generation) network, 3G network, 4G network, or a future evolved network, such as 5G network. 5G network can also be referred to as New Radio (NR). For the convenience of description, the wireless communication network is sometimes referred to as a network in the present disclosure.

Further, the network device involved in the present disclosure can also be referred to as a wireless access network device. The wireless access network device can be a base station, an evolved node B, a home base station, an access point (AP) in wireless fidelity (WIFI) system, a wireless relay node, a wireless backhaul node, a transmission point (TP) or a transmission and reception point (TRP), etc. The wireless access network device can also be gNB in NR system. Alternatively, the wireless access network device can be a component or a part of devices that constitute the base station. When used as a communication system in an Internet of vehicles (V2X), the network device can also be an onboard device. It should be understood that specific technologies and forms adopted by the network device are not limited in embodiments of the present disclosure.

Further, the terminal involved in the present disclosure can also be referred to as a terminal device, user equipment (UE), a mobile station (MS), a mobile terminal (MT), etc., which are devices that provide voice and/or data connection to users. For example, the terminal can be a handheld device, a vehicle mounted device with wireless connection functions, etc. Some examples of terminals include smart mobile phones, pocket personal computers (PPCs), handheld computers, personal digital assistants (PDAs), laptops, tablets, wearable devices, or vehicle mounted devices. In addition, a communication system in an Internet of vehicles (V2X), the terminal device can also be an onboard device. It should be understood that specific technologies and forms adopted by the terminal are not limited in embodiments of the present disclosure.

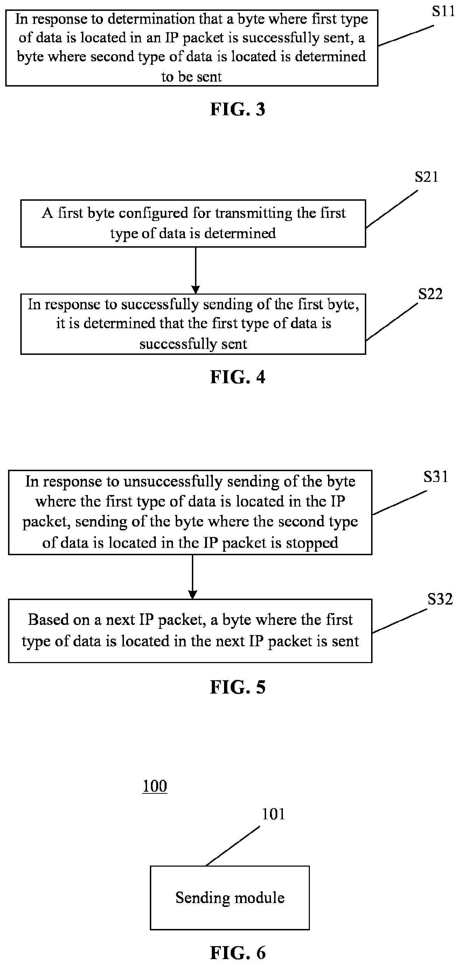

FIG. 3 is a flowchart of a data transmission method according to embodiments of the present disclosure. As shown in FIG. 3, the data transmission method is applied to a data sender, and includes the following steps.

In step S11, in response to determination that a byte where first type of data is located in an IP packet is successfully sent, a byte where second type of data is located is determined to be sent.

In some embodiments of the present disclosure, the data sender classifies the data to be transmitted based on importance of the data, to obtain the first type of data and the second type of data. In some embodiments, the importance of the first type of data is greater than the importance of the second type of data. The first type of data and the second type of data are placed in corresponding bytes in the IP packet. The bytes in the IP packet are sent one by one based on an order of bytes included in the IP packet, to achieve the sending of the IP packet.

In some embodiments of the present disclosure, the data sender can be a terminal, or the data sender can also be a network device.

According to the data transmission method provided in embodiments of the present disclosure, different types of data to be transmitted are placed in bytes in the IP packet corresponding thereto, and then the IP packet is sent based on the order of the bytes. If the first type of data is successfully sent, the second type of data is then determined to be sent. That is, if the first type of data is unsuccessfully sent, subsequent bytes are then determined not to be sent, which can save IP packet resources required for the data transmission. The transmission efficiency of the IP packet can be further improved by improving the transmission efficiency of bytes. As a result, the goal of improving the data transmission efficiency can be achieved.

FIG. 4 is a flowchart of a data transmission method according to embodiments of the present disclosure. As shown in FIG. 4, the data transmission method is applied to the data sender, and includes the following steps.

In step S21, a first byte configured for transmitting the first type of data is determined.

In some embodiments, the first byte is the first N bytes in the IP packet, where N is a positive integer.

In step S22, in response to successfully sending of the first byte, it is determined that the first type of data is successfully sent.

In some embodiments of the present disclosure, the data sender determines the first type of data and the second type of data included in the data to be transmitted, and determines the first byte for transmitting the first type of data and the second byte for transmitting the second type of data. The first byte is the first N bytes in the IP packet.

After determining that the first N bytes have been successfully sent at the data sender, the data sender determines that all the first type of data has been sent to the data receiver.

In some embodiments of the present disclosure, the quantity of the first byte in the IP packet can be determined based on a protocol provision or a rule. In some embodiments, the value of the quantity of the first N bytes (the first byte) in the IP packet can be fixed or not fixed, that is, the value of N can be determined based on the data to be transmitted.

In some embodiments of the present disclosure, as described above, the data sender determines the second byte for transmitting the second type of data. The second byte is bytes other than the first byte in the IP packet.

FIG. 5 is a flowchart of a data transmission method according to embodiments of the present disclosure. As shown in FIG. 5, the data transmission method is applied to the data sender, and includes the following steps.

In step S31, in response to unsuccessfully sending of the byte where the first type of data is located in the IP packet, sending of the byte where the second type of data is located in the IP packet is stopped.

In step S32, based on a next IP packet, a byte where the first type of data is located in the next IP packet is sent.

In some embodiments of the present disclosure, the data sender sends the IP packet based on the order of bytes in the IP packet. The byte where the first type of data is located is the first byte, and the first byte is the first N bytes in the IP packet. After the first N bytes in the IP packet have been sent to the data receiver, the second byte in the IP packet is determined to be sent, and the second byte is the remaining bytes in the IP packet other than the first byte. If the data sender determines that the first N bytes in the IP packet includes any byte unsuccessfully sent, the data sender then determines to abandon sending of all subsequent bytes. That is, sending of the byte where the second type of data is located in the IP data packet is stopped. The data sender determines to abandon the transmission of the IP packet and to send the byte where the first type of data is located in the next IP packet based on the next IP packet to be transmitted.

In the case where the first N bytes in the IP packet includes the byte unsuccessfully sent, it is determined that the relatively important data in the IP packet has not been successfully sent, and the other data in the IP packet will be considered to be invalid transmission. In such case, abandoning the transmission of the IP packet can not only reduce the waste of transmission resources, but also improve the efficiency of data transmission.

Based on the same concept, embodiments of the present disclosure also provide a data transmission apparatus.

It can be understood that the data transmission apparatus provided by embodiments of the present disclosure include a hardware structure and/or a software module corresponding to each function in order to realize the above functions. In combination with the units and algorithm steps in examples disclosed in embodiments of the present disclosure, embodiments of the present disclosure can be implemented in the form of hardware or a combination of hardware and computer software. Whether a function is implemented in the way of hardware or computer software driving the hardware depends on a specific application and design constraints of a technical solution. Those skilled in the art can use different methods to implement the described functions for each specific application, but such an implementation should not be considered beyond the scope of technical solutions of embodiments of the present disclosure.

FIG. 6 is a block diagram of a data transmission apparatus according to embodiments of the present disclosure. Referring to FIG. 6, the data transmission apparatus 100 is applied to a data sender, and includes a sending module 101.

The sending module 101 is configured to determine, in response to determination that a byte where first type of data is located in an IP (Internet Protocol) packet is successfully sent, to send a byte where second type of data is located. In some embodiments, the importance of the first type of data is greater than the importance of the second type of data.

In some embodiments of the present disclosure, the sending module 101 is configured to determine a first byte configured for transmitting the first type of data, with the first byte being the first N bytes in the IP packet, and N being a positive integer; and to determine that the first type of data is successfully sent in response to successfully sending of the first byte.

In some embodiments of the present disclosure, the first byte is determined based on a protocol provision or a rule.

In some embodiments of the present disclosure, the bytes where the second type of data is located include a second byte, and second byte is bytes other than the first byte in the IP data packet.

In some embodiments of the present disclosure, the sending module 101 is further configured to stop, in response to unsuccessfully sending of the byte where the first type of data is located in the IP packet, sending of the byte where the second type of data is located in the IP packet; and to send, based on a next IP packet, a byte where the first type of data is located in the next IP packet.

As for the apparatus in the above embodiments, specific ways in which each module performs the function has been described in detail in the method embodiments, which will not be described in detail here.

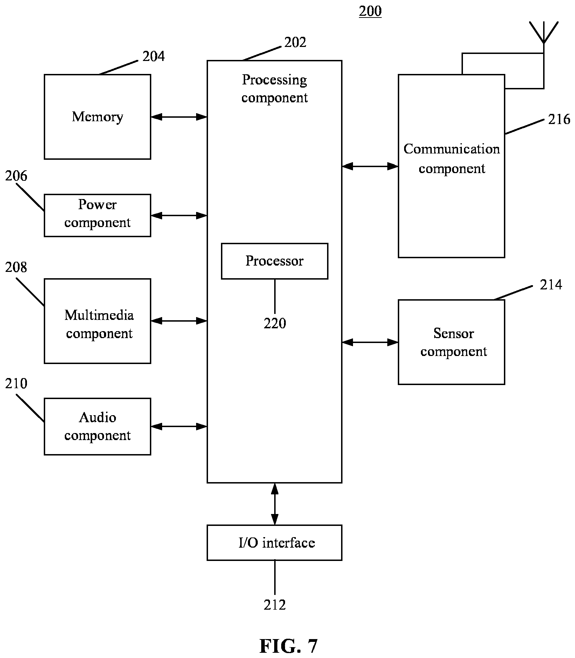

FIG. 7 is a block diagram of a device 200 for monitoring a paging message according to some embodiments. For example, the device 200 can be a mobile phone, a computer, a digital broadcasting user device, a messaging device, a game console, a tablet device, a medical device, a fitness device, a personal digital assistant, etc.

Referring to FIG. 7, device 200 can include at least one of the following components: a processing component 202, a memory 204, a power component 206, a multimedia component 208, an audio component 210, an input/output (I/O) interface 212, a sensor component 214, and a communication component 216.

The processing component 202 typically controls the overall operation of the device 200, such as operations associated with display, telephone call, data communication, camera operation, and recording operations. The processing component 202 may include one or more processors to execute instructions to complete all or part of the methods described above. In addition, the processing component 202 may include one or more modules to facilitate interactions between the processing component 202 and other components. For example, the processing component 202 may include a multimedia module to facilitate interaction between the multimedia component 208 and the processing component 202.

The memory 204 is configured to store various types of data to support operations in the device 200. Examples of such data include instructions, contact data, phone book data, messages, pictures, videos, and the like for any application or method operating on the device 200. The memory 204 can be implemented by any type of volatile or non-volatile storage device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or optical disk.

The power component 206 provides power for various components of the device 200. The power component 206 may include a power management system, one or more power supplies, and other components associated with generating, managing, and distributing power for the device 200.

The multimedia component 208 includes a display screen providing an output interface between the device 200 and the user. In some embodiments, the screen may include a liquid crystal display (LCD) and a touch panel (TP). If the screen includes a touch panel, the screen can be implemented as a touch screen to receive input signals from the user. The touch panel includes one or more touch sensors to sense touch, sliding, and gestures on the touch panel. The touch sensor can not only sense the boundaries of touch or sliding actions, but also detect the duration and pressure related to the touch or sliding operation. In some embodiments, the multimedia component 208 includes a front camera and/or a rear camera. When the device 200 is in operation mode, such as shooting mode or video mode, the front camera and/or rear camera can receive external multimedia data. Each front camera and rear camera can be a fixed optical lens system or have focal length and optical zoom capability.

The audio component 210 is configured to output and/or input audio signals. For example, the audio component 210 includes a microphone (MIC), which is configured to receive an external audio signal when the device 200 is in an operation mode, such as a calling mode, a recording mode, and a voice recognition mode. The received audio signal may be further stored in memory 204 or transmitted via communication component 216. In some embodiments, the audio component 210 also includes a speaker for outputting audio signals.

The I/O interface 212 provides an interface between the processing component 202 and peripheral interface modules, which can be a keyboard, click wheel, button, etc. These buttons may include, but are not limited to, the Home button, Volume button, Start button, and Lock button.

The sensor component 214 includes one or more sensors for providing various aspects of condition evaluation for the device 200. For example, the sensor component 214 can detect an open/closed state of the device 200, relative positioning of the components. The component is, for example, a display and a keypad of the device 200. The sensor component 214 can also detect changes in the position of the device 200 or one component of the device 200, presence or absence of the user's contact with the device 200, orientation or acceleration/deceleration of the device 200 and temperature change of the device 200. The sensor component 214 may include a proximity sensor configured to detect the presence of nearby objects without any physical contact. The sensor component 214 may also include a light sensor, such as a CMOS or CCD image sensor, for use in imaging applications. In some embodiments, the sensor component 214 may also include an acceleration sensor, a gyroscope sensor, a magnetic sensor, a pressure sensor, or a temperature sensor.

The communication component 216 is configured to facilitate wired or wireless communication between the device 200 and other devices. The device 200 can access wireless networks based on communication standards, such as WiFi, 2G or 3G, or a combination thereof. In some embodiments, the communication component 216 receives a broadcast signal or broadcast related information from an external broadcast management system via a broadcast channel. In some embodiments, the communication component 216 also includes a near field communication (NFC) module to facilitate short range communication. For example, the NFC module can be implemented based on radio frequency identification (RFID) technology, infrared data association (IrDA) technology, ultra wideband (UWB) technology, Bluetooth (BT) technology and other technologies.

In some embodiments, the device 200 can be implemented through one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for implementing above methods.

In some embodiments, a non-transitory computer-readable storage medium including instructions is also provided, such as a memory 204 including instructions, which can be executed by a processor of the device 200 to complete above methods. For example, the non-transitory computer-readable storage medium can be ROM, random access memory (RAM), CD-ROM, tapes, floppy disks, optical data storage devices, etc.

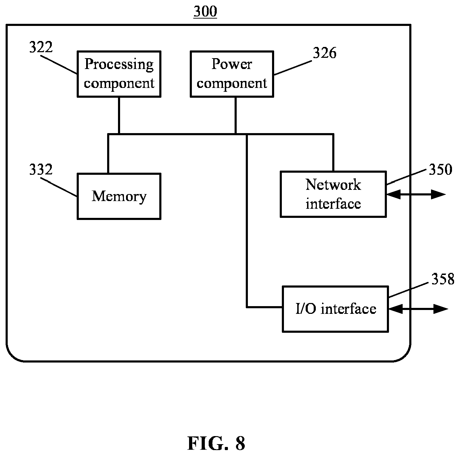

FIG. 8 is a block diagram of a device 300 for monitoring a paging message according to some embodiments. For example, the device 300 can be provided as a server. Referring to FIG. 8, the device 300 includes a processing component 322, which further includes one or more processors, as well as memory resources represented by a memory 332, for storing instructions that can be executed by the processing component 322, such as application programs. The application programs stored in memory 332 may include one or more modules corresponding to a set of instructions. In addition, the processing component 322 is configured to execute instructions to implement the method described above.

The device 300 can further include a power component 326 configured to perform power management of the device 300, a wired or wireless network interface 350 configured to connect the device 300 to the network, and an input and output (I/O) interface 358. The device 300 can operate operating systems stored on the memory 332, such as Windows Server TM, Mac OS XTM, UnixTM, LinuxTM, FreeBSDTM, or similar systems.

It should be further understood that "multiple" in the present disclosure refers to two or more, and other quantifiers are similar. "And/or" describes an association relationship between associated objects, indicating that there can be three relationships. For example, A and/or B can indicate that A alone, both A and B, or B alone. The character "/" generally indicates that the associated objects have an "or" relationship. The singular forms "one", "a" and "the" are also intended to include majority forms, unless the context clearly indicates otherwise.

It should be further understood that the terms "first", "second" and the like are used to describe various kinds of information, but such information should not be limited to these terms. These terms are only used to distinguish the same type of information from each other, and do not indicate a specific order or importance. In fact, the expressions "first" and "second" can be used interchangeably. For example, without departing from the scope of the present disclosure, the first information can also be referred to as the second information, and similarly, the second information can also be referred to as the first information.

It should be further understood that although the operations in embodiments of the present disclosure are described in a specific order in the drawings, they should not be understood that these operations are required to be performed in the specific order or serial order shown, or that all of the operations shown are required to be performed to achieve the desired results. Multitasking and parallel processing may be advantageous in a particular environment.

After considering the specification and practices of the invention disclosed herein, those skilled in the art will easily come up with other implementation solutions of the present disclosure. The present disclosure aims to cover any variations, uses, or adaptive changes of the present disclosure, which follow the general principles of the present disclosure and include common knowledge or commonly used technical means in the art that are not disclosed in the present disclosure. The specification and embodiments are only considered exemplary, and the true scope and spirit of the present disclosure are defined by appended claims.

It should be understood that the present disclosure is not limited to the precise structure described above and shown in the drawings, and various modifications and changes can be made without departing from its scope. The scope of the present disclosure is limited only by the appended claims.

## Claims

1. A data transmission method, applied to a data sender, and the method comprising:
determining, in response to determination that a byte where first type of data is located in an Internet Protocol, IP, packet is successfully sent, a byte where second type of data is located to be sent;
wherein importance of the first type of data is greater than importance of the second type of data.

2. The data transmission method according to claim 1, wherein the determination that the byte where the first type of data is located in the IP packet is successfully sent comprises:
determining a first byte configured for transmitting the first type of data, wherein the first byte is the first N bytes in the IP packet, where N is a positive integer; and
determining, in response to successfully sending of the first byte, that the first type of data is successfully sent.

3. The data transmission method according to claim 2, wherein the first byte is determined based on a protocol provision or a rule.

4. The data transmission method according to claim 1, wherein the byte where the second type of data is located comprises a second byte, and the second byte is a byte other than the first byte in the IP packet.

5. The data transmission method according to claim 1, further comprising:
stopping, in response to unsuccessfully sending of the byte where the first type of data is located in the IP packet, sending of the byte where the second type of data is located in the IP packet; and
sending, based on a next IP packet, a byte where the first type of data is located in the next IP packet.

6. A data transmission apparatus, applied to a data sender, and the apparatus comprising:
determining, in response to determination that a byte where first type of data is located in an Internet Protocol, IP, packet is successfully sent, a byte where second type of data is located to be sent;
wherein importance of the first type of data is greater than importance of the second type of data.

7. A data transmission device, comprising:
a processor; and
a memory configured to store instructions executable by the processor;
wherein the processor is configured to implement the data transmission method according to any of claims 1 to 5.

8. A non-transitory computer-readable storage medium that, when instructions in the storage medium are executed by a processor of a mobile terminal, enables the mobile terminal to implement the data transmission method according to any of claims 1 to 5.
